# EUROPÄISCHE PATENTSCHRIFT

(11) **EP 1 108 812 B1**
(45) Veröffentlichungstag und Bekanntmachung des Hinweises auf die Patenterteilung: **18.08.2004**
(21) Anmeldenummer: 00124545.5
(22) Anmeldetag: 09.11.2000
(51) Int. Cl.: D06F 58/28

(54) **Haushalt-Kondensations-Wäschetrockner und Verfahren zu seinem Betrieb**
Domestic laundry drier with condenser and method of operating the same
Sèche-linge a condensation domestique et sa méthode de mise en oeuvre

(30) Priorität: 13.12.1999 DE 19959977
(43) Veröffentlichungstag der Anmeldung: 20.06.2001
(73) Patentinhaber: BSH Bosch und Siemens Hausgeräte GmbH, 81739 München (DE)
(72) Erfinder: Schulz, Manfred, 10829 Berlin (DE)

(56) Entgegenhaltungen:
- EP-A- 0 328 250
- EP-A- 0 424 781
- WO-A-00/47810
- DE-A- 3 412 284
- DE-A- 19 508 244

## Beschreibung

Die Erfindung betrifft ein Verfahren zum Betreiben eines Haushaltkondenswäschetrockners, bei dem von einem Prozeßluftgebläse ein von einer Heizeinrichtung erwärmter Prozeßluftstrom durch eine drehbare Wäschetrommel und anschließend durch einen Kondensator hindurchgeleitet wird, der von einem in bezug auf die Gebläseleistung in eine Drehrichtung optimierten Kühlluftgebläse gekühlt wird, wobei das Prozeßluftgebläse und das Kühlluftgebläse drehfest miteinander verbunden sind und zusammen mit der Trommel von einem Motor angetrieben werden und das Volumenverhältnis des Kühlluftstroms zum Prozeßluftstrom in der Gegenrichtung des Kühlluftgebläses geringer ist als in dessen Vorzugsrichtung sowie einen zur Durchführung dieses Verfahrens geeigneten Haushaltkondenswäschetrockner mit den vorgenannten Elementen und einer Steuereinrichtung.

Durch die EP 328 250 ist ein derartiger Kondenswäschetrockner bekannt, bei dem jedoch sowohl Prozeßluft- als auch Kühlluftgebläse in eine Drehrichtung optimiert sind, so daß beim Betrieb der Gebläse in Gegenrichtung beide Luftströme im gleichen Verhältnis abnehmen. Beim Betrieb dieses Wäschetrockners wird die Drehrichtung der Gebläse reversiert, wobei sie in jeder Betriebsphase länger in ihrer Vorzugsrichtung als in ihrer Gegenrichtung betrieben werden.

Es sind weiterhin Haushaltkondenswäschetrockner mit einem Prozeßluftgebläse bekannt, dessen Gebläseleistung in beide Drehrichtungen gleich ist oder zumindest in Gegenrichtung nicht so stark abfällt, wie es bei in eine Drehrichtung optimierten Gebläsen der Fall ist. Auf diese Weise wird vermieden, daß bei im wesentlichen gleichem Heizleistungseintrag die Prozeßluft überhitzt wird. Andernfalls müßte nachteiligerweise in den Phasen mit zu stark verringertem Prozeßluftstrom die Heizleistung verringert werden, was einen konstruktiven Mehraufwand erfordert und wodurch der Trocknungsvorgang verlängert würde. Zusätzlich ist es bekannt, bei solchen Wäschetrocknem zur Verringerung des Energieverbrauchs das Kühlluftgebläse zu optimieren, was sich in der Praxis nur in bezug auf eine Drehrichtung erreichen läßt. In Gegenrichtung verringert sich dementsprechend die Gebläseleistung des Kühlluftgebläses erheblich, so daß bei Drehrichtungsumkehr sich auch das Verhältnis zwischen Kühl- und Prozeßluftstrom ändert. Wie bei der EP 328 250 werden jedoch die Gebläse bekannterweise immer entweder ausschließlich oder weitgehend überwiegend in der Vorzugsrichtung betrieben, um einen möglichst hohen Kühlluftstrom beziehungsweise Prozeßluftstrom zu erreichen.

Weiterhin ist durch die DE 3412284 A1 ein Kondenswäschetrockner bekannt, bei dem für den Antrieb des Prozeßluftgebläses und des Kühlluftgebläses jeweils ein eigener Motor vorgesehen ist, so daß diese Gebläse unabhängig voneinander betrieben werden können. Zum Betrieb dieses Wäschetrockners wird ein Verfahren beschrieben, bei dem mindestens während der Aufheizphase der Kühlluftstrom abgestellt wird, um den Aufheizvorgang zu beschleunigen. Nachteiligerweise ist dazu jedoch ein zusätzlicher Antriebsmotor mit Ansteuerung nötig, der zu erheblichen Mehrkosten führt.

Der vorliegenden Erfindung liegt die Aufgabe zugrunde, ein Verfahren sowie einen Haushaltkondenswäschetrockner der eingangs genannten Art zu schaffen, mit denen mit geringem Aufwand und ohne Nachteile bei der Prozeß- beziehungsweise Kühlluftführung die Dauer der Aufheizphase und damit der Energieverbrauch verringert werden kann.

Diese Aufgabe wird erfindungsgemäß durch ein Verfahren, nach dem Kennzeichen des Anspruchs, sowie durch einen Haushaltkondenswäschetrockner zur Durchführung dieses Verfahrens nach dem Kennzeichen des Anspruchs 6 gelöst.

Auf diese Weise kann trotz Verwendung nur eines Motors für den Antrieb der beiden Gebläse die Kühlleistung des Kondensators im Verhältnis zum Prozeßluftstrom in der Aufheizphase verringert werden, da bei entsprechend gestalteten Gebläsen durch die Drehrichtungsumkehr der beiden Gebläse das Verhältnis zwischen dem Prozeßluftstrom zum Kühlluftstrom verändert werden kann. Die Prozeßluft kann so schneller aufgeheizt werden.

Vorteilhafterweise sind zu diesem Zweck die beiden Gebläse Radialgebläse, wobei das Kühlluftgebläse einseitig und das Prozeßluftgebläse zweiseitig ist. Beim Kühlluftgebläse können die Schaufeln einheitlich beispielsweise nach vorne gekrümmt sein, so daß sich im Zusammenwirken mit einem schneckenförmigen Gebläsegehäuse in eine Drehrichtung eine maximale Gebläseleistung erzielen läßt.

Bei dem zweiseitigen Prozeßluftgebläse können die Schaufeln auf den beiden Seiten unterschiedlich ausgerichtet sein, so daß das Verhältnis der Gebläseleistungen in den beiden Drehrichtungen geringer ist als beim Kühlluftgebläse. Beispielsweise können auf der einen Seite die Schaufeln nach vorne gekrümmt und auf der anderen nach hinten gekrümmt sein. Entsprechend können auch die Gebläseleistungen für die beiden Drehrichtungen durch Verwendung eines im wesentlichen symmetrischen Gebläsegehäuses aneinander angenähert werden.

Dabei kann das Prozeßluftgebläse auch in beide Drehrichtungen die gleiche Gebläseleistung besitzen. Dies kann beispielsweise durch Verwendung von ungekrümmten beziehungsweise gerade, radial nach außen verlaufenden Schaufeln zusammen mit einem symmetrischen Gebläsegehäuse erreicht werden. Auf diese Weise läßt sich eine möglichst große Differenz des Verhältnisses Kühlluftstrom zu Prozeßluftstrom bei Änderung der Drehrichtung erzielen, wodurch auch die Prozeßluft in der Aufheizphase schneller aufgeheizt wird.

In der Aufheizphase wird die Drehrichtung der Gebläse reversiert. Die Dauer der Vorzugsrichtung kann dabei zur Dauer der Gegenrichtung des Kühlluftgebläses ein Verhältnis von etwa 1:10 bis etwa 1:50 aufweisen. Durch das Reversieren kann die Bildung von Wäscheknäuel verhindert werden, wobei durch die überwiegende Drehung in Gegenrichtung des Kühlluftgebläses dennoch ein sehr geringes Verhältnis von Kühlluftstrom zu Prozeßluftstrom und damit eine möglichst geringe Abkühlung der Prozeßluft erzielt wird.

Weiterhin kann in der Aufheizphase bei Reversieren der Drehrichtung der Gebläse auch das Verhältnis der Dauer der Vorzugsrichtung zu der Dauer der Gegenrichtung des Kühlluftgebläses mit ansteigender Prozeßlufttemperatur stetig erhöht werden. Auf diese Weise kann eine Pulsweitenmodulation erzielt werden, mit der das Verhältnis von Kühlluftstrom zu Prozeßluftstrom und damit die Abkühlung der Prozeßluft im Kondensator kontinuierlich verändert werden kann. Dieses Verfahren läßt sich insbesondere zusammen mit einer Regelung verwenden, die so vorteilhafterweise mit einer kontinuierlich veränderlichen Stellgröße auf den Prozeß einwirken kann.

Oberhalb einer vorbestimmten Prozeßlufttemperatur können die Gebläse wenigstens überwiegend in der Vorzugsrichtung des Kühlluftgebläses betrieben werden. Dadurch kann der Wirkungsgrad insbesondere des Kühlluftgebläses und die Kühlleistung des Kondensators erhöht werden, so daß die Trocknungsdauer und der Energieverbrauch verringert werden können. Dabei können die Gebläse in dieser Phase auch ausschließlich in der Vorzugsrichtung des Kühlluftgebläses betrieben werden.

Dabei kann auch vorgesehen werden, daß oberhalb einer vorbestimmten Prozeßlufttemperatur die Drehrichtung der Gebläse reversiert wird und zur Regelung der Prozeßlufttemperatur das Verhältnis der Dauer der Vorzugsrichtung zu der Dauer der Gegenrichtung des Kühlluftgebläses verändert wird. Da in den meisten Fällen zur Verhinderung von Wäscheknäuels die Drehrichtung der Trommel und damit auch der Gebläse ohnehin reversiert wird, kann so durch Pulsweitenmodulation der Drehrichtungen die Temperatur der Prozeßluft ohne Veränderung der Heizleistung geregelt werden. Auf diese Weise kann der Heizleistungseintrag durchgehend hochgehalten werden, so daß die Trocknung nicht unnötig verzögert wird. Das Verhältnis der beiden Drehrichtungen läßt sich besonders einfach und bei sehr geringem Mehraufwand als Stellgröße verwenden, da die nötigen Änderungen in der Regel nur das Steuerprogramm betreffen.

Weitere Einzelheiten, Merkmale und Vorteile der Erfindung ergeben sich aus der folgenden Beschreibung eines Ausführungsbeispiels eines erfindungsgemäßen Haushaltkondenswäschetrockners sowie zweier Ausführungsbeispiele eines erfindungsgemäßen Verfahrens zum Betreiben eines solchen Haushaltkondenswäschetrockners unter Bezugnahme auf die Zeichnungen. Darin zeigen:
- Fig. 1: eine schematische Schnittansicht durch einen erfindungsgemäßen Haushaltkondenswäschetrockner gemäß Ausführungsbeispiel,
- Fig. 2: den schematischen Temperaturverlauf der Prozeßluft in der Aufheizphase bei einem Haushaltkondenswäschetrockner gemäß der vorliegenden Erfindung beziehungsweise gemäß dem Stand der Technik und
- Fig. 3: zwei Ausführungsbeispiele für die Ansteuerung der Gebläse gemäß dem erfindungsgemäßen Verfahren.

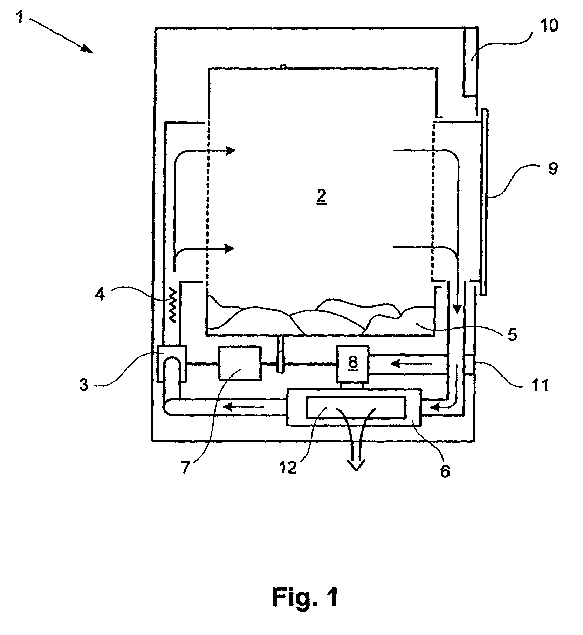

Der in Fig. 1 dargestellte Wäschetrockner 1 weist eine drehbar gelagerte Trommel 2 zur Aufnahme der zu trocknenden Wäsche 5 auf. Durch die Trommel 2 hindurch verläuft ein geschlossener Prozeßluftstrom, der von einem Prozeßluftgebläse 3 erzeugt wird. Die Trommel 2 kann von einer am Gehäuse angelenkten Tür 9 verschlossen werden, die ein Flusenfilter aufweist und durch die der Prozeßluftstrom hindurch verläuft. Im Prozeßluftkreislauf sind weiterhin eine Heizeinrichtung 4 zum Erwärmen der Prozeßluft sowie ein luftgekühlter Kondensator 6 angeordnet, mit dem die Prozeßluft zur Kondensation von darin enthaltener Feuchtigkeit abgekühlt werden kann. Der Kondensator 6 wird durch Kühlluft gekühlt, die von einem Kühlluftgebläse 8 durch eine Eingangsöffnung 11 von der Umgebung des Wäschetrockners 1 angesaugt, durch den Kondensator 6 quer zum Prozeßluftverlauf hindurch geblasen und anschließend durch eine Öffnung 12 wieder aus dem Wäschetrockner 1 herausgeblasen wird.

Beide Gebläse 3, 8 sind Radialgebläse, wobei das Kühlluftgebläse 8 einseitig und das Prozeßluftgebläse 3 zweiseitig ist. Die Schaufeln des Kühlluftgebläses 8 sind nach vorne gekrümmt, so daß sich im Zusammenwirken mit einem schneckenförmigen Gebläsegehäuse in eine Vorzugsrichtung eine maximale Gebläseleistung erzielen läßt. Bei dem zweiseitigen Prozeßluftgebläse 3 sind die Schaufeln auf den beiden Seiten unterschiedlich ausgerichtet, so daß die Gebläseleistung in Gegenrichtung im Vergleich zur Vorzugsrichtung weit weniger stark abfällt als beim Kühlluftgebläse 8.

Das Prozeßluftgebläse 3 sowie das Kühlluftgebläse 8 werden von einem Motor 7 angetrieben, der über einen in der Fig. 1 teilweise dargestellten Riemen auch die Trommel 2 in Drehrichtung antreibt. Der Wäschetrockner 1 weist weiterhin eine Steuereinrichtung 10 auf, mit der unter anderem die Temperatur des Prozeßluftstroms erfaßt und der Motor 7 in beide Drehrichtungen angesteuert werden kann.

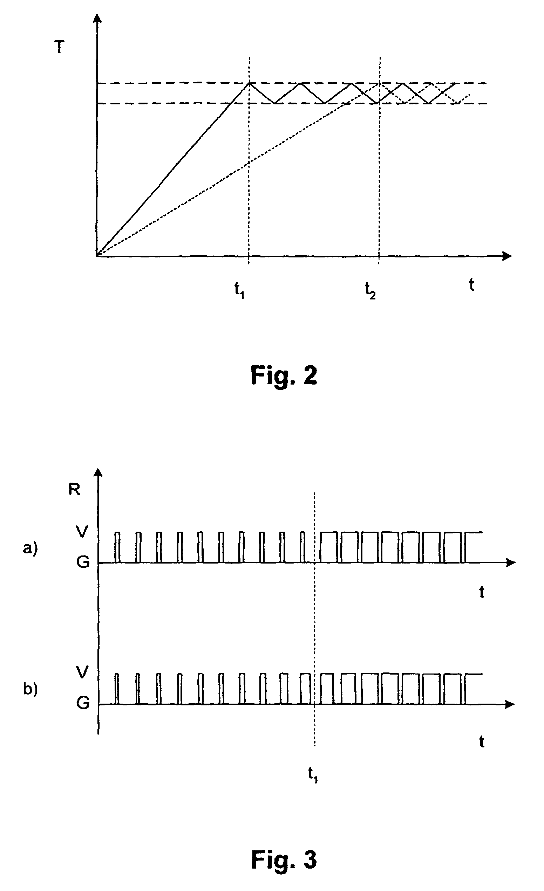

In Fig. 2 ist schematisch der Temperaturverlauf der Prozeßluft bei einem Haushaltkondenswäschetrockner gemäß der vorliegenden Erfindung beziehungsweise gemäß dem Stand der Technik dargestellt, wobei der Temperaturverlauf bei einem erfindungsgemäßen Haushaltwäschetrockner 1 von der durchgezogenen Linie dargestellt ist. In beiden Fällen steigt die Prozeßlufttemperatur zu Beginn des Trocknungsvorgangs bis zu einem oberen Temperaturschwellwert an, bei dem die Temperaturregelung der Heizeinrichtung 4 anspricht. Die Temperaturregelung für die Heizeinrichtung 4 weist eine geringe Hysterese auf, so daß nach Ausschalten der Heizeinrichtung 4 die Prozeßlufttemperatur bis zu einem unteren Temperaturschwellwert absinkt, bei dem die Heizeinrichtung 4 wieder eingeschaltet wird. Die Prozeßlufttemperatur wird auf diese Weise zwischen den beiden Temperaturschwellwerten gehalten.

Bei dem Wäschetrockner gemäß dem Stand der Technik wird bereits zu Beginn des Trocknungsvorgangs das Kühlluftgebläse 8 zusammen mit dem Prozeßluftgebläse 3 überwiegend in der Vorzugsrichtung betrieben, so daß aufgrund des hohen Kühlluftstroms, der nach Erreichen der Prozeßluftsolltemperatur für eine schnelle Trocknung auch erwünscht ist, die Prozeßluft im Kondensator 6 stark abgekühlt wird. Die Prozeßluft erreicht aus diesem Grund ihre Solltemperatur beziehungsweise den oberen Temperaturschwellwert erstmalig zum Zeitpunkt t2. Demgegenüber wird bei dem erfindungsgemäßen Wäschetrockner 1 das Kühlluftgebläse 8 zu Beginn des Trocknungsvorgangs überwiegend in der Gegenrichtung betrieben, so daß aufgrund des geringeren Kühlluftstroms dem nicht im gleichen Maße verringerten Prozeßluftstrom weniger Wärme entzogen wird, so daß dieser die Solltemperatur bereits zu einem früheren Zeitpunkt t₁ erreicht. Die Drehrichtung des Motors 7 wird dabei reversiert, wobei er jedoch in der Aufheizphase jeweils nur sehr kurz in der Vorzugsrichtung des Kühlluftgebläses 8 gedreht wird. Auf diese Weise wird auch die Drehrichtung der Trommel 2 reversiert, so daß sich darin keine Wäscheknäuel bilden können.

In Fig. 3 sind zwei Ausführungsbeispiele für eine reversierende Ansteuerung des Motors 7 zur Verwendung im erfindungsgemäßen Verfahren dargestellt. In der Ausführungsform a) ist die Zeitdauer, in der der Motor 7 in der Vorzugsrichtung des Kühlluftgebläses 8 angetrieben wird, bis zum Erreichen des Zeitpunkts t, gleichbleibend gering. Wenn die Prozeßlufttemperatur zum Zeitpunkt t₁ ihren Sollwert erreicht hat, wird der Reversierrhythmus im wesentlichen umgekehrt, so daß der Motor 7 jeweils nur für sehr kurze Zeit in Gegenrichtung des Kühlluftgebläses 8 angetrieben und eine hohe Kühlleistung des Kondensators 6 erreicht wird.

Bei dem Ausführungsbeispiel b) hingegen wird durch Veränderung des Reversierrhythmus, daß heißt des Verhältnisses der Dauer der Gegenrichtung zur Dauer der Vorzugsrichtung, eine Pulsweitenmodulation realisiert, mit der das Verhältnis zwischen Prozeßluftstrom und Kühlluftstrom stetig verändert werden kann. In der Steuereinrichtung 10 ist in diesem Fall eine Regeleinrichtung vorgesehen, die abhängig von der Differenz zwischen der aktuellen und der angestrebten Prozeßlufttemperatur den Reversierrhythmus kontinuierlich und stetig verändert. Im dargestellten Beispiel ist die Dauer der Vorzugsrichtung zu Beginn der Aufheizphase sehr gering und verringert sich kontinuierlich mit steigender Prozeßlufttemperatur bis zum Zeitpunkt t₁ oder kurz danach. Der Motor 7 wird wie im Beispiel a) im Anschluß an die Aufheizphase überwiegend in Vorzugsrichtung des Kühlluftgebläses 8 betrieben, um einen hohen Kühlluftstrom, eine hohe Kondensationsleistung des Kondensators 6 und damit eine geringe Trocknungsdauer zu erzielen.

## Patentansprüche

1. Verfahren zum Betreiben eines Haushaltkondenswäschetrockner (1), bei dem von einem Prozessluftgebläse (3) ein von einer Heizeinrichtung (4) erwärmter Prozessluftstrom durch eine drehbare Wäschetrommel (2) und anschließend durch einen Kondensator (6) hindurchgeleitet wird, der von einem in bezug auf die Gebläseleistung in eine Drehrichtung optimierten Kühlluftgebläse (8) gekühlt wird, wobei das Prozessluftgebläse (3) und das Kühlluftgebläse (8) drehfest miteinander verbunden sind und zusammen mit der Trommel (2) von einem Motor (7) angetrieben werden und das Volumenverhältnis des Kühlluftstroms zum Prozessluftstrom in der Gegenrichtung des Kühlluftgebläses (8) geringer ist als in dessen Vorzugsrichtung, **dadurch gekennzeichnet, dass** in einer Aufheizphase die Gebläse (3, 8) wenigstens überwiegend in der Gegenrichtung des Kühlluftgebläses (8) betrieben werden und dass in der Aufheizphase die Drehrichtung der Gebläse (3, 8) reversiert wird.

2. Verfahren nach Anspruch 1, **dadurch gekennzeichnet, dass** in der Aufheizphase die Drehrichtung der Gebläse (3, 8) reversiert wird und die Dauer der Vorzugsrichtung zur Dauer der Gegenrichtung des Kühlluftgebläses (8) ein Verhältnis von etwa 1:10 bis etwa 1:50 aufweist.

3. Verfahren nach Anspruch 1, **dadurch gekennzeichnet, dass** in der Aufheizphase die Drehrichtung der Gebläse (3, 8) reversiert wird und das Verhältnis der Dauer der Vorzugsrichtung zu der Dauer der Gegenrichtung des Kühlluftgebläses (8) mit Ansteigen der Prozesslufttemperatur stetig erhöht wird.

4. Verfahren nach eine der Ansprüche 1 bis 3, **dadurch gekennzeichnet, dass** oberhalb einer vorbestimmten Prozesslufttemperatur die Gebläse (3, 8) wenigstens überwiegend in der Vorzugsrichtung des Kühlluftgebläses (8) betrieben werden.

5. Verfahren nach Anspruch 4, **dadurch gekennzeichnet, dass** oberhalb einer vorbestimmten Prozesslufttemperatur die Drehrichtung der Gebläse (3, 8) reversiert wird und zur Regelung der Prozesslufttemperatur das Verhältnis der Dauer der Vorzugsrichtung zu der Dauer der Gegenrichtung des Kühlluftgebläses (8) verändert wird.

6. Haushaltkondenswäschetrockner (1) zur Durchführung des Verfahrens nach einem der Ansprüche 1 bis 5, mit einem Prozessluftgebläse (3) zum Hindurchleiten eines von einer Heizeinrichtung (4) erwärmbaren Prozessluftstroms durch eine drehbare Wäschetrommel (2) und anschließend durch einen Kondensator (6), der von einem in bezug auf die Gebläseleistung in eine Drehrichtung optimierten Kühlluftgebläse (8) gekühlt werden kann, wobei das Prozessluftgebläse (3) und das Kühlluftgebläse (8) drehfest miteinander verbunden sind und zusammen mit der Trommel (2) von einem von einer Steuereinrichtung (10) gesteuerten Motor (7) angetrieben werden können und das Volumenverhältnis des Kühlluftstroms zum Prozessluftstrom in der Gegenrichtung des Kühlluftgebläses (8) geringer ist als in dessen Vorzugsrichtung, **dadurch gekennzeichnet, dass** in einer Aufheizphase die Steuereinrichtung (10) den Motor (7) in der Weise betreibt, dass die Drehrichtung der Gebläse (3, 8) , reversiert wird und die Gebläse (3, 8) wenigstens überwiegend in der Gegenrichtung des Kühlluftgebläses (8) angetrieben werden.

7. Haushaltkondenswäschetrockner nach Anspruch 6, **dadurch gekennzeichnet, dass** das Prozessluftgebläse (3) in beide Drehrichtungen die gleiche Gebläseleistung besitzt.

8. Haushaltwäschetrockner nach Anspruch 6 oder 7, **dadurch gekennzeichnet, dass** das Kühlluftgebläse (8) einseitig und das Prozessluftgebläse (3) zweiseitig ist.

## Claims

1. Method of operating a domestic condensation laundry drier (1), in which a process air flow heated by a heating device (4) is conducted by a process air fan (3) through a rotatable laundry drum (2) and subsequently through a condenser (6), which is cooled by a cooling air fan (8) which is optimised in one rotational direction with respect to fan performance, wherein the process air fan (3) and the cooling air fan (8) are connected together to be secure against relative rotation and are driven together with the drum (2) by one motor (7) and the volume ratio of the cooling air flow relative to the process air flow is smaller in the counter direction of the cooling air fan (8) than in the preferential direction thereof, **characterised in that** in a heating-up phase the fans (3, 8) are operated at least predominantly in the counter direction of the cooling air fan (8) and that in the heating-up phase the rotational direction of the fans (3, 8) is reversed.

2. Method according to claim 1, **characterised in that** in the heating-up phase the rotational direction of the fans (3, 8) is reversed and the duration of the preferential direction relative to the duration of the counter direction of the cooling air fan (8) has a ratio of approximately 1:10 to approximately 1:50.

3. Method according to claim 1, **characterised in that** in the heating-up phase the rotational direction of the fans (3, 8) is reversed and the ratio of the duration of the preferential direction to the duration of the counter direction of the cooling air fan (8) is constantly increased with rise in the process air temperature.

4. Method according to one of claims 1 to 3, **characterised in that** above a predetermined process air temperature the fans (3, 8) are operated at least predominantly in the preferential direction of the cooling air fan (8).

5. Method according to claim 4, **characterised in that** above a predetermined process air temperature the rotational direction of the fans (3, 8) is reversed and for regulation of the process air temperature the ratio of the duration of the preferential direction to the duration of the counter direction of the cooling air fan (8) is varied.

6. Domestic condensation laundry drier (1) for carrying out the method according to one of claims 1 to 5, comprising a process air fan (3) for conducting a process air flow, which is heatable by a heating device (4), through a rotatable laundry drum (2) and subsequently through a condenser (6), which can be cooled by a cooling air fan (8) optimised in one rotational direction with respect to the fan performance, wherein the process air fan (3) and the cooling air fan (8) are connected together to be secure against relative rotation and can be driven together with the drum (2) by a motor (7) controlled by a control device (10) and the volume ratio of the cooling air flow to the process air flow in the counter direction of the cooling air fan (8) is smaller than in the preferential direction thereof, **characterised in that** in a heating-up phase the control device (10) operates the motor (7) in the manner that the rotational direction of the fans (3, 8) is reversed and the fans (3, 8) are driven at least predominantly in the counter direction of the cooling air fan (8).

7. Domestic condensation laundry drier according to claim 6, **characterised in that** the process air fan (3) has the same fan performance in both directions of rotation.

8. Domestic laundry drier according to claim 6 or 7, **characterised in that** the cooling air fan (8) is single-sided and the process air fan (3) is double-sided.

## Revendications

1. Procédé de mise en oeuvre d'un sèche-linge à condensation domestique (1), dans lequel un courant d'air de processus chauffé par un dispositif chauffant (4) est envoyé par un ventilateur d'air de processus (3) à travers un tambour à linge (2) rotatif puis à travers un condensateur (6) qui est refroidi par un ventilateur d'air de refroidissement (8) optimisé dans un sens de rotation du point de vue de la puissance de soufflage, le ventilateur d'air de processus (3) et le ventilateur d'air de refroidissement (8) étant reliés l'un à l'autre d'une manière solidaire en rotation et étant entraînés en même temps que le tambour (2) par un moteur (7) et le rapport des volumes du courant d'air de refroidissement et du courant d'air de processus étant moins grand dans le sens de rotation inverse du ventilateur d'air de refroidissement (8) que dans son sens de rotation préférentiel, **caractérisé en ce que** les ventilateurs (3, 8) fonctionnent, au moins principalement, dans le sens de rotation inverse du ventilateur d'air de refroidissement (8) dans une phase de chauffage et **en ce que** le sens de rotation des ventilateurs (3, 8) est inversé dans la phase de chauffage.

2. Procédé selon la revendication 1, **caractérisé en ce que** le sens de rotation des ventilateurs (3, 8) est inversé dans la phase de chauffage et le rapport entre la durée du sens de rotation préférentiel et la durée du sens de rotation inverse du ventilateur d'air de refroidissement (8) est de l'ordre de 1:10 jusqu'à 1:50.

3. Procédé selon la revendication 1, **caractérisé en ce que** le sens de rotation des ventilateurs (3, 8) est inversé dans la phase de chauffage et le rapport entre la durée du sens de rotation préférentiel et la durée du sens de rotation inverse du ventilateur d'air de refroidissement (8) est augmenté en permanence à mesure que la température de l'air de processus augmente.

4. Procédé selon l'une des revendications 1 à 3, **caractérisé en ce que,** au-dessus d'une température prédéterminée de l'air de processus, les ventilateurs (3, 8) fonctionnent, au moins principalement, dans le sens de rotation préférentiel du ventilateur d'air de refroidissement (8).

5. Procédé selon la revendication 4, **caractérisé en ce que**, au-dessus d'une température prédéterminée de l'air de processus, le sens de rotation des ventilateurs (3, 8) est inversé et le rapport entre la durée du sens de rotation préférentiel et la durée du sens de rotation inverse du ventilateur d'air de refroidissement (8) est modifié en vue de réguler la température de l'air de processus.

6. Sèche-linge à condensation domestique (1) pour l'exécution du procédé selon l'une des revendications 1 à 5, comprenant un ventilateur d'air de processus (3) servant à envoyer un courant d'air de processus pouvant être chauffé par un dispositif chauffant (4) à travers un tambour à linge (2) rotatif puis à travers un condensateur (6) qui peut être refroidi par un ventilateur d'air de refroidissement (8) optimisé dans un sens de rotation du point de vue de la puissance de soufflage, le ventilateur d'air de processus (3) et le ventilateur d'air de refroidissement (8) étant reliés l'un à l'autre d'une manière solidaire en rotation et pouvant être entraînés en même temps que le tambour (2) par un moteur (7) commandé par un dispositif de commande (10) et le rapport des volumes du courant d'air de refroidissement et du courant d'air de processus étant moins grand dans le sens de rotation inverse du ventilateur d'air de refroidissement (8) que dans son sens de rotation préférentiel, **caractérisé en ce que** le dispositif de commande (10) actionne le moteur (7), dans une phase de chauffage, de manière à ce que le sens de rotation des ventilateurs (3, 8) soit inversé et les ventilateurs (3, 8) sont entraînés, au moins principalement, dans le sens de rotation inverse du ventilateur d'air de refroidissement (8).

7. Sèche-linge à condensation domestique selon la revendication 6, **caractérisé en ce que** le ventilateur d'air de processus (3) possède la même puissance de soufflage dans les deux sens de rotation.

8. Sèche-linge à condensation domestique selon la revendication 6 ou 7, **caractérisé en ce que** le ventilateur d'air de refroidissement (8) est unidirectionnel et le ventilateur d'air de processus (3) est bidirectionnel.
